# EUROPÄISCHE PATENTSCHRIFT

(11) **EP 3 081 908 B1**
(45) Veröffentlichungstag und Bekanntmachung des Hinweises auf die Patenterteilung: **20.09.2017**
(21) Anmeldenummer: 16159770.3
(22) Anmeldetag: 11.03.2016
(51) Int. Cl.: G01F 1/66, G01N 29/024, G01F 1/00, G01F 1/74

(54) **VERFAHREN UND VORRICHTUNG ZUM ERKENNEN DES VORHANDENSEINS VON FLÜSSIGKEIT IN EINEM GASSTROM**
METHOD AND DEVICE FOR DETECTING THE PRESENCE OF A LIQUID IN A GAS FLOW
PROCÉDÉ ET DISPOSITIF DE DÉTECTION DE LA PRÉSENCE D'UN LIQUIDE DANS UN FLUX DE GAZ

(30) Priorität: 14.04.2015 DE 102015105685
(43) Veröffentlichungstag der Anmeldung: 19.10.2016
(73) Patentinhaber: SICK Engineering GmbH, 01458 Ottendorf-Okrilla (DE)
(72) Erfinder: Ehrlich, Dr. Andreas, 01129 Dresden (DE)
(74) Vertreter: Ludewigt, Christoph

(56) Entgegenhaltungen:
- EP-A2- 1 186 868
- EP-B1- 2 428 776
- US-A1- 2004 011 141
- US-A1- 2010 010 756

## Beschreibung

Die Erfindung betrifft ein Verfahren zum Erkennen des Vorhandenseins von Flüssigkeit in einem in einer Rohrleitung strömenden Gasstrom und ein Ultraschalldurchflussmessgerät, mit dem dieses Verfahren durchgeführt wird.

In der Prozessdurchflussmesstechnik sind verschiedene Messverfahren und Messvorrichtungen bekannt. Zunehmend werden für die Durchflussmessung Ultraschallzähler eingesetzt. Ein solcher ist aus der EP 2 428 776 B1 bekannt und weist paarweise angeordnete Ultraschallwandler auf, wobei jedes Paar einen Messpfad definiert, der in einem nicht senkrechten Winkel zur Längsachse (Strömungsrichtung) liegt, so dass die gesendeten und empfangenen Ultraschallsignale entlang der Messpfade in einem bestimmten Winkel ungleich 90° zur Strömungsrichtung sich ausbreiten. Das Messprinzip besteht in einer Bestimmung einer Laufzeitdifferenz zweier solcher Ultraschallsignale, die auf einem Messpfad in entgegengesetzte Richtung laufen und so einmal eine Komponente in Strömungsrichtung und einmal eine Komponente entgegen der Strömungsrichtung aufweisen. Aus der gemessenen Laufzeitdifferenz lässt sich die Strömungsgeschwindigkeit berechnen und mit Kenntnis des Rohrquerschnitts der Durchfluss.

Bei derartigen Durchflussmessgeräten, die z. B. an großen Erdgasleitungen eingesetzt werden, um die durchgeleitete Gasmenge zu bestimmen, werden sehr hohe Messgenauigkeiten gefordert, da bereits kleinste Abweichungen in der Durchflussmessung bei den gewaltigen Erdgasmengen große Differenzen in dem monetären Gegenwert ausmachen können.

Ein Faktor, der zur Verfälschung einer Messung beiträgt, ist das Vorhandensein von Flüssigkeit in der Rohrleitung. Es sollte somit frühzeitig erkannt werden, wenn Flüssigkeit im Messbereich vorliegt, damit die Messergebnisse entweder richtig bewertet werden können oder sogar entsprechende Gegenmaßnahmen getroffen werden können.

Dazu ist es aus der EP 2 428 776 B1 bekannt, die Strömungsgeschwindigkeiten für das Gas auf zwei verschiedenen, horizontalen, parallelen Ebenen zu bestimmen, wobei die Ebenen oberhalb und unterhalb der Mitte der Rohrleitung liegen und von dieser einen gleichen Abstand haben. Im Idealfall und ohne Flüssigkeit im Rohr sind beide Strömungsgeschwindigkeiten gleich und haben auch den gleichen Grad an Turbulenz, wobei die Turbulenz in der EP 2 428 776 B1 definiert ist als die statistische Streuung der Einzelwerte von Strömungsgeschwindigkeiten auf einer Ebene. Bildet man nun jeweils das Verhältnis der Turbulenzen aus den beiden Ebenen und das Verhältnis der Strömungsgeschwindigkeiten des Gases auf den beiden Ebenen, so sind diese Verhältnisse im Idealfall gleich 1. Treten Abweichungen von 1 auf, so ist das regelmäßig ein Indiz von Vorhandensein von Flüssigkeit, denn Flüssigkeit lagert sich unten in der Rohrleitung ab und beeinflusst daher den unteren Messpfad mehr als den weiter entfernten oberen Messpfad. Auf diese Weise sind also zwei Indikatoren erhalten, über die man auf das Vorhandensein von Flüssigkeit schließen kann.

Obwohl diese Lösung schon gute Ergebnisse liefert, ist es dennoch wünschenswert, noch bessere Indikatoren zu haben, die empfindlicher sind, und/oder auf weitere Strömungen ansprechen.

Ausgehend von diesem Stand der Technik ist es daher Aufgabe der Erfindung, ein Verfahren und Vorrichtung bereitzustellen, mit dem noch besser und empfindlicher Flüssigkeit in der Rohrleitung erkannt werden kann.

Diese Aufgabe wird gelöst durch ein Verfahren mit den Merkmalen des Anspruchs 1 und ein Ultraschalldurchflussmessgerät mit den Merkmalen des Anspruchs 11. Ein dreistufiges Verfahren hat es bisher nicht gegeben. Die Abstufung hat den Vorteil, dass relativ schnell, z. B. bereits in der ersten Stufe, eine Flüssigkeitsansammlung erkannt werden kann.

Das Erkennungsprinzip der zweiten Stufe ist prinzipiell aus der EP 2 428 776 B1 bekannt.

Die dritte Stufe ist neu. Man erwartet eigentlich dass die Flüssigkeitsansammlungen abseits eines Messpfades die Schallgeschwindigkeit im Gas nicht beeinflussen, denn die Schallgeschwindigkeit im Gas ist unabhängig von Turbulenzen, weil sie nur eine Materialeigenschaft ist.

Dennoch haben die Erfinder überraschenderweise herausgefunden, dass Flüssigkeitsansammlungen im Rohrabschnitt bereits die Schallgeschwindigkeit so beeinflussen, dass die erfindungsgemäße Auswertung möglich ist, und das, obwohl auf dem Messpfad selbst keine Flüssigkeitsansammlung vorliegt. Vermutlich sind aber Nebeltröpfchen und sonstige Partikel, deren Häufigkeit und/oder Zusammensetzung mit Abstand zur Flüssigkeitsansammlung zu variieren scheint, verantwortlich für unterschiedliche Schallgeschwindigkeiten in Ebenen mit unterschiedlichem Abstand zur Flüssigkeitsansammlung. Dabei hat sich herausgestellt, dass die erfindungsgemäße Auswertung sogar empfindlicher ist und es somit möglich ist, Flüssigkeiten schon in kleineren Mengen erkennen zu können.

Das Verfahren ist dreistufig ausgebildet und vorteilhafterweise werden die drei Stufen zyklisch nacheinander abgearbeitet, denn jede Stufe hat eine andere Empfindlichkeit.

Die erste Stufe ist am unempfindlichsten aber kann am schnellsten ausgewertet werden. Wenn nämlich nur der unterste Messpfad keinen Messwert für die Strömungsgeschwindigkeit des Gases liefert, befindet er sich innerhalb der Flüssigkeit. Eine weitere Auswertung auf den beiden anderen Stufen ist dann nicht mehr notwendig.

Die zweite Stufe, in der Verhältnisse von Turbulenzen gebildet werden, ist empfindlicher als die Ermittlung aus der ersten Stufe. Wird in der zweiten Stufe Flüssigkeit ermittelt, weil das ermittelte Verhältnis zu stark von 1 abweicht, ist das ein Zeichen für das Vorhandensein von Flüssigkeit und die dritte Stufe kann entfallen.

In der dritten Stufe wird schließlich das Verhältnis der Schallgeschwindigkeiten eines Paares von Messpfaden ermittelt. Es hat sich herausgestellt, dass das Verhältnis der Schallgeschwindigkeiten anscheinend am empfindlichsten auf das Vorhandensein von Flüssigkeit im Rohrabschnitt reagiert. Zumindest hat sich in der Praxis herausgestellt, dass dieses Verhältnis auf Fälle anspricht, die in den ersten beiden Stufen nicht detektiert werden, so dass dieses Verfahren in dem letzten Schritt angewendet wird und kleinere Mengen Flüssigkeit als bisher möglich, erkannt werden können.

Vorteilhafterweise wird ein Turbulenzwert als Standardabweichung über mehrere Messungen der Strömungsgeschwindigkeit des Gases auf einem Messpfad definiert, wie prinzipiell aus der EP 2 428 776 B1 bekannt.

Da das Verfahren zur Erkennung des Vorhandenseins von Flüssigkeit eigentlich erst dann Sinn macht, wenn eine Gasströmung vorliegt, ist in Weiterbildung der Erfindung vorgesehen, dass vor dem ersten Schritt geprüft wird, ob die Strömungsgeschwindigkeit des Gases einen Mindestwert überschreitet und die Schritte zur Erkennung von Flüssigkeit erst durchgeführt werden, wenn der Mindestwert überschritten ist. Dieser Mindestwert kann auf irgendeinem der Messpfade ermittelt werden. Vorzugsweise könnte der Mindestwert auf der oberen Ebene ermittelt werden, denn dort ist das Vorhandensein von Flüssigkeit unwahrscheinlich. Es sollte aber nicht der unterste Messpfad sein, denn dort ist die Wahrscheinlichkeit von Flüssigkeit am höchsten.

Das erfindungsgemäße Verfahren kann mit einem Paar von Messpfaden auskommen. Wenn aber zwei oder mehr Paare von Messpfaden vorhanden sind, die dann notwendigerweise auf unterschiedlichen Höhen angeordnet sein müssen, kann eine genauere Abtastung des Strahlprofils erfolgen. Außerdem kann bei Ausfall eines Messpfads auf eines oder mehrere andere Paare von Messpfaden ausgewichen werden.

Wenn mehrere Paare von Messpfaden vorhanden sind, können im zweiten und/oder dritten Schritt Messungen von verschiedenen Paaren von Messpfaden herangezogen werden. Bei geeigneter Verknüpfung der Messungen kann sich eine höhere Genauigkeit ergeben.

Im Folgenden wird die Erfindung anhand eines Ausführungsbeispiels unter Bezugnahme auf die Zeichnung im Einzelnen erläutert. In der Zeichnung zeigen:

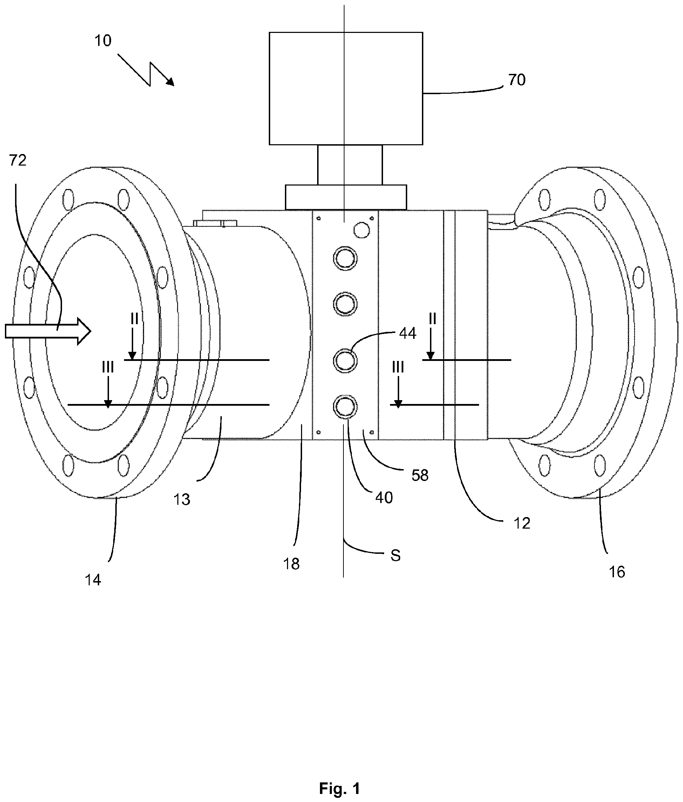

- Fig. 1: eine perspektivische Ansicht eines erfindungsgemäßen Ultraschalldurchflussmessgeräts;
- Fig. 2 und 3: Querschnitte entlang der Linien II-II und III-III aus Fig. 1;
- Fig. 4: eine Ansicht des Ultraschalldurchflussmessgeräts in Längsrichtung;
- Fig. 5: ein Flussdiagramm des erfindungsgemäßen Verfahrens.

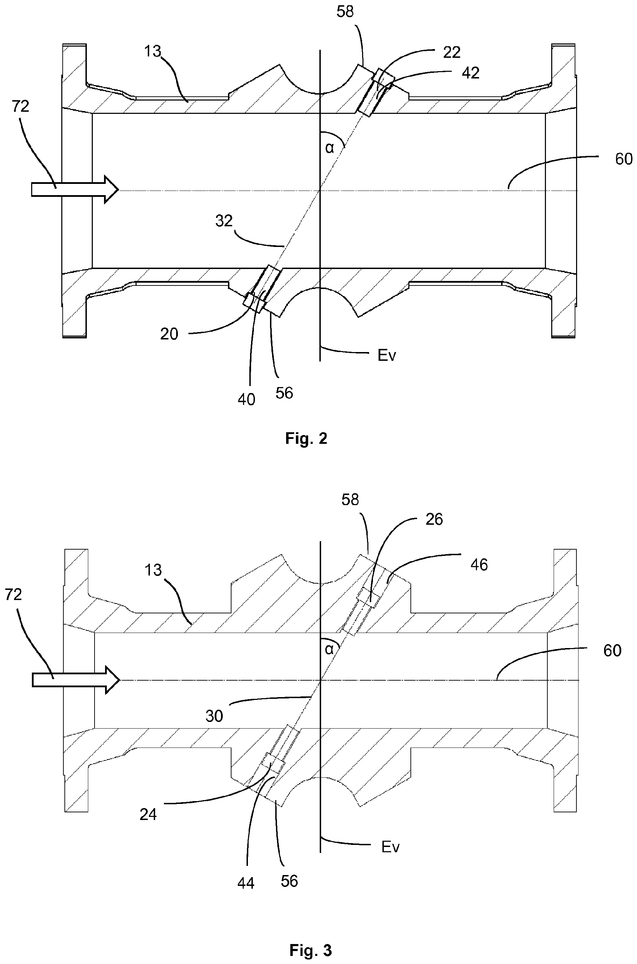

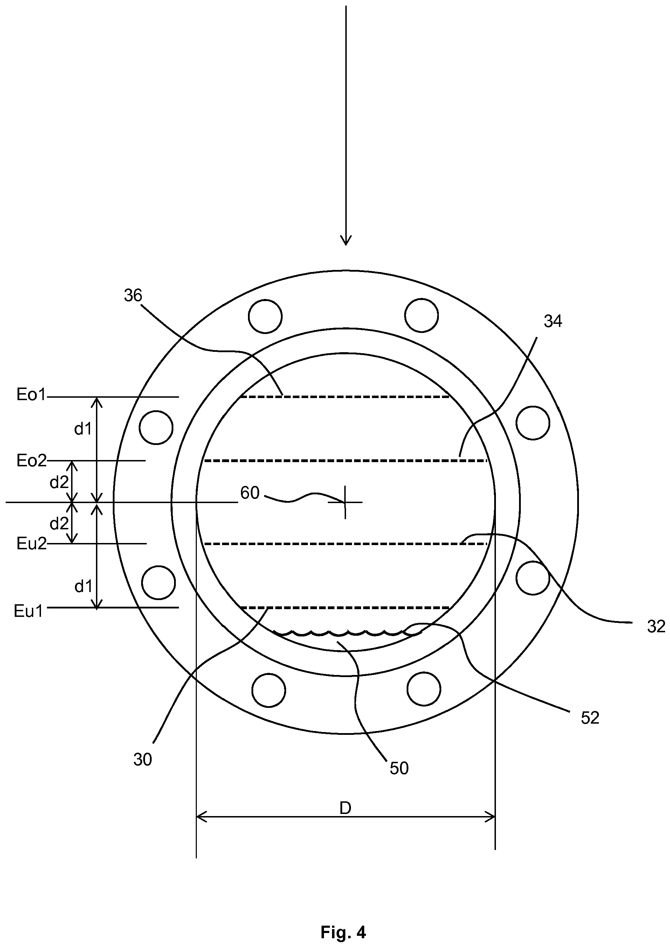

Eine erfindungsgemäße Vorrichtung 10 weist einen Messaufnehmer 12 auf, der aus einem zwischen Anschlussflanschen 14 und 16 angeordnetem Rohrleitungsabschnitt 13 besteht. Das Rohrleitungsabschnitt 13 ist in seinem Inneren vorzugsweise kreisrund mit einer Nennweite D ausgebildet, entsprechend einer an die Anschlussflansche 14 und 16 anzuschließenden, nicht näher dargestellten Rohrleitung für ein Gas. Des Weiteren weist die Vorrichtung 10 in einer Rohrwandung 18 jeweils paarweise gegenüberliegend angeordnete Ultraschallwandler 20, 22, 24, 26 auf, von denen in der Zeichnung (Fig. 2 und 3) nur einige dargestellt sind und die nachfolgend auch einfach als Sonden bezeichnet werden. Die Ultraschallwandler definieren Messpfade 30, 32, 34, 36 wie weiter unten beschrieben wird (Fig. 4). Zur Signalauswertung weist die Vorrichtung 10 eine Auswerteeinheit 70 auf, die über einen Befestigungsflansch am Messaufnehmer 12 befestigbar ist. Über geeignete Kabelverbindungen, die in der Zeichnung nicht dargestellt sind, sind die Sonden mit der Auswerteeinheit 70 verbindbar. Die erfindungsgemäße Vorrichtung zum Messen der Strömungsgeschwindigkeit und/oder des Durchflusses eines Fluids wird bevorzugt als Gaszähler eingesetzt.

Die Sonden 20, 22, 24, 26 sind gehalten in Sondenaufnahmen 40, 42, 44, 46 (Fig. 2 und 3), die als Bohrungen in zwei ebenen Aufnahmeflächen 56 und 58 der Rohrwandung 18 ausgebildet sind. Die Aufnahmeflächen 56 und 58 verlaufen parallel zueinander und sind in einem Winkel ungleich 0° zur Mittelachse 60 des Rohrleitungsabschnitts 13, die auch die Messaufnehmer- und Strömungsachse bildet, angeordnet (Fig. 2 und 3).

Jeweils gegenüberliegende Sondenaufnahmen 40-42, 44-46 fluchten miteinander, so dass die in die Sondenaufnahmen eingesetzten Sonden 20, 22, 24, 26 zueinander ausgerichtet sind und die Messpfade 30, 32, 34, 36 definieren (Fig. 4). Dabei senden und empfangen die Sonden Ultraschallsignale geradlinig in ihrer Längsrichtung entlang des jeweiligen Messpfades 30, 32, 34, 36. Damit verlaufen sämtliche Messpfade dieses Ausführungsbeispiels parallel zueinander und liegen in einer gemeinsamen senkrechten Ebene S (Fig. 4). Jeder Messpfad liegt in einem Winkel α zu einer Ebene Ev, die sich senkrecht zur Mittelachse 60 bzw. Strömungsrichtung 72 erstreckt.

Der durch das Innere des Messaufnehmers 12 strömende Gasdurchfluss wird in bekannter Weise bestimmt, indem zunächst die Strömungsgeschwindigkeit des Gases bestimmt wird, indem eine Laufzeitdifferenz von Ultraschallsignalen, die auf einem Messpfad in beide Richtungen laufen und damit eine Komponente in und entgegen der Strömungsrichtung besitzen, gemessen wird. Aus der Strömungsgeschwindigkeit kann mit Kenntnis des Rohrquerschnitts der Durchfluss ausgerechnet werden. Die Ultraschallwandler dienen dabei sowohl als Sender wie auch als Empfänger, so dass jeder Messpfad von den Ultraschallsignalen in beiden Richtungen genutzt wird.

Aus der Laufzeit der Ultraschallsignale auf einem Messpfad kann die Schallgeschwindigkeit SoS (Speed Of Sound) im Gas auf dem Messpfad berechnet werden. Die Schallgeschwindigkeit SoS ist nämlich der Mittelwert der Geschwindigkeiten zweier in entgegengesetzter Richtung laufender Ultraschallsignale, also der zweifache Abtand zwischen den beiden Ultraschallwandlern dividiert durch die Summe der beiden Laufzeiten hin und zurück.

Im Idealfall einer ungestörten, homogenen, laminaren oder turbulenten Strömung würde ein Messpfad ausreichen, um die Strömungsgeschwindigkeit und damit den Durchfluss zu bestimmen. Damit Inhomogenitäten im Strömungsprofil über den Querschnitt nicht das Ergebnis verfälschen, sind mehrere Messpfade vorgesehen, die das Strömungsprofil an unterschiedlichen Stellen, also mit unterschiedlichem Abstand zur Messaufnehmerachse 60 abtasten. Aus den Einzelergebnissen für die Messpfade 30, 32, 34, 36 ergibt sich durch geeignete Integrationsverfahren der Durchfluss. Die Messpfade 30, 32, 34, 36 sind so in parallelen, horizontalen Ebenen Eu1, Eu2, Eo1, Eo2 übereinander angeordnet.

Die Erfindung fordert jetzt eine weitere spezielle Anordnung der Messpfade. Zwei Messpfade gleicher Länger bilden immer ein Paar von Messpfaden. In dem Ausführungsbeispiel nach der Zeichnung bilden die Messpfade 30 und 36 sowie 32 und 34 je ein Paar. In einem Paar haben die beiden Messpfade gleiche Länge, verlaufen parallel zueinander und erstrecken sich in separaten horizontalen Ebenen Eu1 und Eo1 bzw. Eu2 und Eo2.

Jede horizontale Ebene eines Paares ist in vertikaler Richtung um eine gleiche, vordefinierte Distanz d1 bzw. d2 bezüglich der Mittelachse 60 verschoben, so dass eine der Ebenen Eo1 bzw. Eo2 in einem oberen Bereich oberhalb der Mittelachse 60 gelegen ist und die andere Ebene Eu1 bzw. Eu2 in einem unteren Bereich unterhalb der Mittelachse 60 gelegen ist.

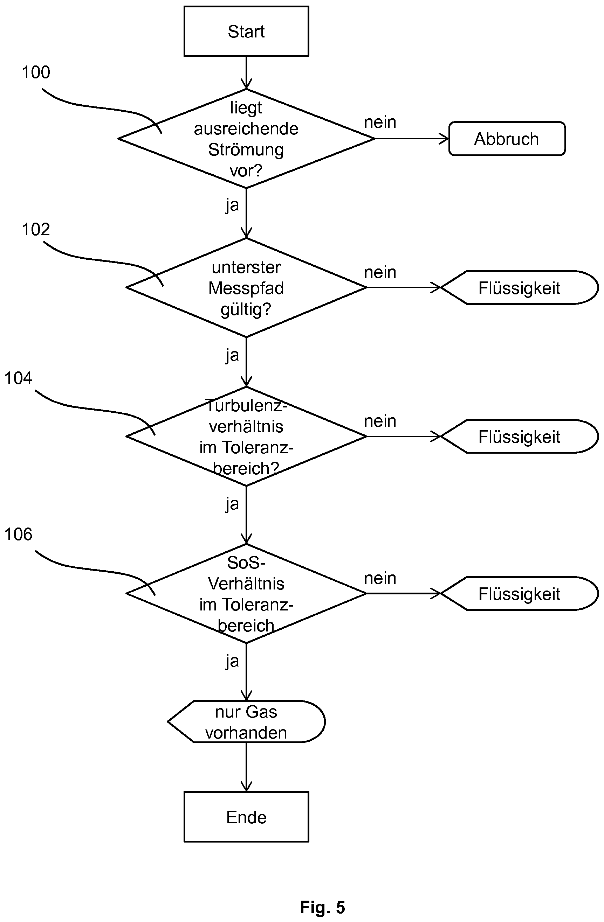

Das erfindungsgemäße Verfahren betrifft jetzt die Erkennung von Flüssigkeit 50 in dem Rohrabschnitt 13. Dazu werden lediglich die sowieso für die Durchflussbestimmung vorhandenen Messungen herangezogen. Das Verfahren läuft wie nachfolgend beschrieben und wie in Fig. 5 schematisch dargestellt ab: Nach dem Start wird zunächst in Schritt 100 geprüft, ob überhaupt eine ausreichende Gasströmung vorliegt, denn wenn die Strömungsgeschwindigkeit des Gases nicht einen Mindestwert überschreitet, also gar keine oder eine zu langsame Strömung vorliegt, wird das Verfahren keinen Sinn machen. Dann ist es auch nicht wichtig, ob eine Flüssigkeit 50 vorliegt. Dieser Mindestwert kann theoretisch auf irgendeinem der Messpfade ermittelt werden. Vorzugsweise sollte der Mindestwert auf der obersten Ebene ermittelt werden, denn dort ist das Vorhandensein von Flüssigkeit am unwahrscheinlichsten. Es sollte jedenfalls nicht der unterste Messpfad genommen werden, denn dort ist die Wahrscheinlichkeit von Flüssigkeit am höchsten.

In einem folgenden Schritt 102 (erste Stufe) wird geprüft, ob der unterste Messpfad 30 einen gültigen Messwert für die Strömungsgeschwindigkeit des Gases liefert. Liegt nämlich derart viel Flüssigkeit 50 in dem Rohrabschnitt 13 vor, dass der Flüssigkeitsspiegel sich oberhalb der untersten Ebene Eu1 befindet, dann liegt der komplette Messpfad in der Flüssigkeit. Es würde dann für die Schallgeschwindigkeit SoS ein für Gas unsinniger und damit ungültiger Wert gemessen und die Messung einer Strömungsgeschwindigkeit ungültig machen. Wurde das Vorhandensein von Flüssigkeit in diesem Schritt 102 ermittelt, wird ein Flüssigkeitswarnsignal ausgegeben. Die nachfolgenden Schritte sind dann nicht mehr notwendig.

In einem Schritt 104 (zweite Stufe) wird ein Turbulenzwert für jeden der beiden Messpfade eines Paares aus einer Mehrfachmessung der Strömungsgeschwindigkeiten auf einem Messpfad in einer Richtung ermittelt und das Verhältnis der beiden Turbulenzwerte gebildet. Der Turbulenzwert kann z. B. durch die Standardabweichung über mehrere Messungen der Strömungsgeschwindigkeit auf einem Messpfad in eine Richtung definiert sein. Ist die Strömung nämlich stark turbulent, wird die Strömungsgeschwindigkeit stärker streuen als in einer nicht so turbulenten Strömung. Es wird dann geprüft, ob das Verhältnis der Turbulenzwerte um mehr als einen vorgegebenen Toleranzwert von 1 abweicht. Ohne Flüssigkeit 50 im Rohrabschnitt 13 sollte das Verhältnis 1 sein oder zumindest sehr nahe an 1 liegen. Weicht das Verhältnis aber beispielsweise um mehr als 10% ab, kann das das Vorhandensein von Flüssigkeit anzeigen. Wie groß die Toleranzwerte sein sollten, muss empirisch ermittelt werden. Die Toleranzwerte können nach oben und unten auch unterschiedlich sein. Beispielsweise könnten diese so liegen, dass das Verhältnis zwischen 0,9 und 1,15 liegen sollte. Wurde das Vorhandensein von Flüssigkeit in diesem Schritt 104 ermittelt, wird ein Flüssigkeitswarnsignal ausgegeben. Der nachfolgende Schritt ist dann nicht mehr notwendig.

In einem Schritt 106 (dritte Stufe) schließlich wird die jeweilige Schallgeschwindigkeit SoS auf beiden Messpfaden eines Paares ermittelt und das Verhältnis der beiden Schallgeschwindigkeiten gebildet. Es wird dann analog wie bei den Turbulenzwerten geprüft, ob das Verhältnis der Schallgeschwindigkeiten um mehr als einen vorgegebenen Toleranzwert von 1 abweicht. Als Beispiel seien wieder Zahlen genannt. Grenzen für das Verhältnis könnten beispielsweise liegen bei 0,999 und 1,001.

Während des Betriebes des Ultraschalldurchflussmessgeräts wird das erfindungsgemäße Verfahren vorzugsweise permanent durchgeführt und die drei Stufen zyklisch nacheinander abgearbeitet.

## Patentansprüche

1. Verfahren zum Erkennen des Vorhandenseins von Flüssigkeit (50) in einem in einer Rohrleitung strömenden Gasstrom, unter Verwendung eines Ultraschalldurchflussmessgeräts (10), wobei das Ultraschalldurchflussmessgerät (10) einen horizontalen Rohrleitungsabschnitt (13) aufweist, durch den Gas in eine Strömungsrichtung (72) strömen kann und der eine Mittelachse (60) aufweist, und zumindest ein Paar von Messpfaden (30, 36; 32, 34) gleicher Länge umfasst, die voneinander beabstandet sind, sich parallel zueinander in separaten horizontalen Ebenen (Eu1 und Eo1; Eu2 und Eo2) erstrecken und bezüglich der Strömungsrichtung (72) geneigt sind, wobei jede horizontale Ebene (Eu1, Eo1; Eu2, Eo2) eines Paares von Messpfaden (30, 36; 32, 34) vertikal um eine gleiche vordefinierte Distanz (d1; d2) bezüglich der Mittelachse (60) verschoben ist, so dass eine der Ebenen (Eo1; Eo2) in einem oberen Bereich oberhalb der Mittelachse (60) gelegen ist und die andere Ebene (Eu1; Eu2) in einem unteren Bereich unterhalb der Mittelachse (60) gelegen ist, wobei ein Ultraschallwandler (24, 26; 20, 22) an jedem Ende eines Messpfades (30; 32) angeordnet ist und wobei jeder Ultraschallwandler (24, 26; 20, 22) ausgebildet ist, um selektiv als ein Ultraschallsender und als ein Ultraschallempfänger zu wirken, so dass auf einem Messpfad Ultraschallsignale in beide Richtungen gesendet und empfangen werden können und aus der Laufzeit der Ultraschallsignale die Strömungsgeschwindigkeit des Gases in der Ebene des Messpfads und die Schallgeschwindigkeit im Gas (SoS) bestimmt werden kann, wobei das Verfahren dreistufig ausgebildet ist und
- in einer ersten Stufe (102) geprüft wird, ob der unterste Messpfad (30) einen gültigen Messwert für die Strömungsgeschwindigkeit des Gases liefert,
- in einer zweiten Stufe (104) ein Turbulenzwert für jeden Messpfad (30, 36; 32, 34) eines Paares aus einer Mehrfachmessung der Strömungsgeschwindigkeit des Gases in der Ebene eines Messpfads (30, 36; 32, 34) ermittelt wird und das Verhältnis der beiden Turbulenzwerte gebildet wird,
- in einer dritten Stufe (106) die jeweilige Schallgeschwindigkeit (SoS) auf beiden Messpfaden (30, 36; 32, 34) eines Paares ermittelt wird und das Verhältnis der beiden Schallgeschwindigkeiten (SoS) gebildet wird,
und ein Flüssigkeitswarnsignal ausgegeben wird,
- wenn in der ersten Stufe ein ungültiger Messwert geliefert wird, oder
- wenn in der zweiten Stufe das Verhältnis der Turbulenzwerte um mehr als einen vorgegebenen Toleranzwert von 1 abweicht, oder
- wenn in der dritten Stufe das Verhältnis der Schallgeschwindigkeiten um mehr als einen vorgegebenen Toleranzwert von 1 abweicht.

2. Verfahren nach Anspruch 1, **dadurch gekennzeichnet, dass** die drei Stufen (102, 104, 106) zyklisch nacheinander abgearbeitet werden.

3. Verfahren nach einem der vorhergehenden Ansprüche, **dadurch gekennzeichnet, dass** ein Turbulenzwert als Standardabweichung über mehrere Messungen der Strömungsgeschwindigkeiten des Gases auf einer Messpfadebene (Eu1; Eo1; Eu2; Eo2) definiert wird.

4. Verfahren nach einem der vorhergehenden Ansprüche, **dadurch gekennzeichnet, dass** vor dem ersten Schritt (102) geprüft wird, ob die Strömungsgeschwindigkeit des Gases einen Mindestwert überschreitet und die Schritte erst durchgeführt werden, wenn der Mindestwert überschritten ist.

5. Verfahren nach einem der vorhergehenden Ansprüche, **dadurch gekennzeichnet, dass** der Mindestwert der Strömungsgeschwindigkeit nicht auf der Ebene des untersten Messpfads (Eu1) bestimmt wird.

6. Verfahren nach einem der vorhergehenden Ansprüche, **dadurch gekennzeichnet, dass** ein Paar von Messpfaden (Eu1 und Eo1; Eu2 und Eo2) vorhanden ist.

7. Verfahren nach einem der vorhergehenden Ansprüche, **dadurch gekennzeichnet, dass** zwei Paare von Messpfaden (Eu1 und Eo1, Eu2 und Eo2) vorhanden sind.

8. Verfahren nach einem der vorhergehenden Ansprüche, **dadurch gekennzeichnet, dass** drei Paare von Messpfaden vorhanden sind.

9. Verfahren nach einem der vorhergehenden Ansprüche, **dadurch gekennzeichnet, dass** vier Paare von Messpfaden vorhanden sind.

10. Verfahren nach einem der vorhergehenden Ansprüche 7 bis 9, **dadurch gekennzeichnet, dass** im zweiten (104) und/oder dritten (106) Schritt Messungen von verschiedenen Paaren von Messpfaden herangezogen werden.

11. Ultraschalldurchflussmessgerät (10) zum Messen des Durchflusses eines Gasstroms durch eine Rohrleitung, wobei das Ultraschalldurchflussmessgerät (10) einen horizontalen Rohrleitungsabschnitt (13) aufweist, durch den das Gas in eine Strömungsrichtung (72) strömen kann und der eine Mittelachse (60) aufweist, und mit zumindest ein Paar (30, 32, 34, 36) von Messpfaden gleicher Länge, die voneinander beabstandet sind, sich parallel zueinander in separaten horizontalen Ebenen (Eu1, Eo1, Eu2, Eo2) erstrecken und bezüglich der Strömungsrichtung (72) geneigt sind, wobei jede horizontale Ebene eines Paares von Messpfaden vertikal um eine gleiche vordefinierte Distanz (d1; d2) bezüglich der Mittelachse (72) verschoben ist, so dass eine der Ebenen in einem oberen Bereich oberhalb der Mittelachse (60) gelegen ist und die andere Ebene in einem unteren Bereich unterhalb der Mitteachse (60) gelegen ist, wobei ein Ultraschallwandler (20, 22, 24, 26) an jedem Ende des Messpfades (30, 32, 34, 36) angeordnet ist und wobei jeder Ultraschallwandler (20, 22, 24, 26) ausgebildet ist, um selektiv als ein Ultraschallsender und als ein Ultraschallempfänger zu wirken, so dass auf einem Messpfad (30, 32, 34, 36) Ultraschallsignale in beide Richtungen gesendet und empfangen werden können und aus der gemessenen Laufzeit der Ultraschallsignale die Strömungsgeschwindigkeit des Gases in der Ebene des Messpfads (30, 32, 34, 36) bestimmt werden kann, wobei das Ultraschalldurchflussmessgerät (10) eine Steuer- und Auswerteeinheit (70) aufweist, **dadurch gekennzeichnet, dass** die Auswerteeinheit (70) ausgebildet ist, ein Verfahren nach einem der vorhergehenden Ansprüche durchzuführen und das Vorhandensein von Flüssigkeit (50) in dem Rohrleitungsabschnitt (13) zu erkennen.

## Claims

1. A method for recognizing the presence of liquid (50) in a gas flow flowing in a pipeline using an ultrasound flowmeter (10), wherein the ultrasound flowmeter (10) has a horizontal pipeline section (13) through which gas can flow in a flow direction (72) and which has a center axis (60) and which comprises at least one pair of measurement paths (30, 36; 32, 34) of equal lengths which are spaced apart from one another, which extend in parallel with one another in separate horizontal planes (Eu1 and Eo1; Eu2 and Eo2) and which are inclined with respect to the flow direction (72); wherein each horizontal plane (Eu1, Eo1; Eu2; Eo2) of a pair of measurement paths (30, 36; 32, 34) is displaced vertically by an equal predefined distance (d1; d2) with respect to the center axis (60) such that one of the planes (Eo1; Eo2) lies in an upper region above the center axis (60) and the other plane (Eu1; Eu2) lies in a lower region beneath the center axis (60); wherein an ultrasonic transducer (24, 26; 20, 22) is arranged at each end of a measurement path (30; 32); and wherein each ultrasonic transducer (24, 26; 20, 22) is configured to act selectively as an ultrasound transmitter and as an ultrasound receiver such that ultrasonic signals can be transmitted and received in both directions on a measurement path and the flow speed of the gas in the plane of the measurement path and the speed of sound in the gas (SoS) can be determined from the time of flight of the ultrasonic signals, wherein the method is configured in three stages, and
- in a first stage (102), a check is made whether the bottommost measurement path (30) delivers a valid measurement value for the flow speed of the gas;
- in a second stage (104), a turbulence value for each measurement path (30, 36; 32, 24) of a pair is determined from a multiple measurement of the flow speed of the gas in the plane of a measurement path (30, 36; 32, 34) and the ratio of the two turbulence values is formed;
- in a third stage (106), the respective speed of sound (SoS) is determined on both measurement paths (30, 36; 32, 34) of a pair and the ratio of the two speeds of sound (SoS) is formed;
and a liquid warning signal is output
- when an invalid measurement value is delivered in the first stage; or
- when the ratio of the turbulence values differs from 1 by more than a predefined tolerance value in the second stage; or
- when the ratio of the speeds of sound differs from one 1 by more than a predefined tolerance value in the third stage.

2. A method in accordance with claim 1, **characterized in that** the three stages (102, 104, 106) are worked through cyclically after one another.

3. A method in accordance with one of the preceding claims, **characterized in that** a turbulence value is defined as a standard deviation over a plurality of measurements of the flow speeds of the gas on a measurement path plane (Eu1; Eo1; Eu2; Eo2).

4. A method in accordance with any one of the preceding claims, **characterized in that** a check is made before the first step (102) whether the flow speed of the gas exceeds a minimum value and the steps are only carried out when the minimum value is exceeded.

5. A method in accordance with any one of the preceding claims, **characterized in that** the minimum value of the flow speed is not determined on the plane of the bottommost measurement path (Eu1).

6. A method in accordance with any one of the preceding claims, **characterized in that** a pair of measurement paths (Eu1 and Eo1; Eu2 and Eo2) is present.

7. A method in accordance with any one of the preceding claims, **characterized in that** two pairs of measurement paths (Eu1, Eo1, Eu2, Eo2) are present.

8. A method in accordance with any one of the preceding claims, **characterized in that** three pairs of measurement paths are present.

9. A method in accordance with any one of the preceding claims, **characterized in that** four pairs of measurement paths are present.

10. A method in accordance with any one of the preceding claims 7 to 9, **characterized in that** measurements of different pairs of measurement paths are made use of in the second (104) and/or third (106) steps.

11. An ultrasound flowmeter (10) for measuring the flow of a gas flow through a pipeline, wherein the ultrasound flowmeter (10) has a horizontal pipeline section (13) through which the gas can flow in a flow direction (72) and which has a center axis (60), and having at least one pair (30, 32, 34, 36) of measurement paths of equal lengths which are spaced apart from one another, which extend in parallel with one another in separate horizontal planes (Eu1, Eo1, Eu2, Eo2) and which are inclined with respect to the flow direction (72); wherein each horizontal plane of a pair of measurement paths is displaced vertically by an equal predefined distance (d1; d2) with respect to the center axis (60) such that one of the planes lies in an upper region above the center axis (60) and the other plane lies in a lower region beneath the center axis (60); wherein an ultrasonic transducer (20, 22, 24, 26) is arranged at each end of the measurement path (30, 32, 34, 36); and wherein each ultrasonic transducer (20, 22, 24, 26) is configured to act selectively as an ultrasound transmitter and as an ultrasound receiver such that ultrasonic signals can be transmitted and received in both directions on a measurement path (30, 32, 34, 36) and the flow speed of the gas in the plane of the measurement path (30, 32, 34, 36) can be determined from the measured time of flight of the ultrasonic signals; and wherein the ultrasound flowmeter (10) has a control and evaluation unit (70), **characterized in that** the evaluation unit (70) is configured to carry out a method in accordance with any one of the preceding claims and to recognize the presence of liquid (50) in the pipeline section (13).

## Revendications

1. Procédé de détection de la présence d'un liquide (50) dans un flux de gaz circulant dans une conduite tubulaire, en utilisant un débitmètre à ultrasons (10), le débitmètre à ultrasons (10) comprenant une portion de conduite horizontale (13) à travers laquelle un gaz peut s'écouler en direction d'écoulement (72) et qui comprend un axe central (60), et au moins une paire de trajets de mesure (30, 36 ; 32, 34) de longueur égale et écartés l'un de l'autre, s'étendant parallèlement l'un à l'autre dans des plans horizontaux séparés (Eu1 et Eo1 ; Eu2 et Eo2) et étant inclinés par rapport à ladite direction d'écoulement (72), tels que chaque plan horizontal (Eu1, Eo1 ; Eu2, Eo2) d'une paire de trajets de mesure (30, 36 ; 32, 34) est décalé verticalement d'une distance prédéfinie égale (d1 ; d2) depuis ledit axe central (60), de sorte que l'un des plans (Eo1 ; Eo2) est situé dans une zone supérieure au-dessus de l'axe central (60) et l'autre plan (Eu1; Eu2) est situé dans une zone inférieure au-dessous de l'axe central (60), dans lequel un transducteur à ultrasons (24, 26 ; 20, 22) est agencé à chaque extrémité dudit trajet de mesure (30 ; 32) et chaque transducteur à ultrasons (24, 26 ; 20, 22) est adapté à agir sélectivement comme un émetteur d'ultrasons et comme un récepteur d'ultrasons, de telle sorte qu'il est possible d'émettre et de recevoir des signaux ultrasons dans les deux directions sur un trajet de mesure et de déterminer la vitesse d'écoulement du gaz dans le plan du trajet de mesure et la vitesse du son dans le gaz (SoS) en se basant sur le temps de parcours des signaux ultrasons, le procédé étant mis en oeuvre en trois étapes que sont
- une première étape (102) dans laquelle on vérifie si le trajet de mesure le plus bas (30) fournit une valeur de mesure valide pour la vitesse d'écoulement du gaz,
- une seconde étape (104) dans laquelle on détermine une valeur de turbulence pour chaque trajet de mesure (30, 36 ; 32, 34) d'une paire à partir d'une mesure multiple de la vitesse d'écoulement du gaz dans le plan d'un trajet de mesure (30, 36 ; 32, 34) et on forme un rapport des deux valeurs de turbulence,
- une troisième étape (106) dans laquelle on détermine la vitesse du son SoS) respective sur les deux trajets de mesure (30, 36 ; 32, 34) d'une paire et on forme le rapport des deux vitesses du son (SoS),
un signal d'avertissement de liquide étant émis
- lorsque, dans la première étape, une valeur de mesure non valide est fournie, ou
- lorsque, dans la seconde étape, le rapport des valeurs de turbulence s'écarte de 1 de plus d'une valeur de tolérance donnée, ou
- lorsque, dans la troisième étape, le rapport des vitesses du son s'écarte de 1 de plus d'une valeur de tolérance donnée.

2. Procédé selon la revendication 1,
**caractérisé en ce que**
on exécute les trois étapes (102, 104, 106) cycliquement les unes après les autres.

3. Procédé selon l'une des revendications précédentes,
**caractérisé en ce que**
on définit une valeur de turbulence à titre d'écart standard sur plusieurs mesures des vitesses d'écoulement du gaz dans un plan de trajet de mesure (Eu1 ; Eo1 ; Eu2 ; Eo2).

4. Procédé selon l'une des revendications précédentes,
**caractérisé en ce que**
avant la première étape (102), on vérifie si les vitesses d'écoulement du gaz dépassent une valeur minimale, et on n'exécute les étapes que si la valeur minimale est dépassée.

5. Procédé selon l'une des revendications précédentes,
**caractérisé en ce que**
on ne détermine pas la valeur minimale de la vitesse d'écoulement sur le plan du trajet de mesure le plus bas (Eu1).

6. Procédé selon l'une des revendications précédentes,
**caractérisé en ce que**
il existe une paire de trajets de mesure (Eu1 et Eo1 ; Eu2 et Eo2).

7. Procédé selon l'une des revendications précédentes,
**caractérisé en ce que**
il existe deux paires de trajets de mesure (Eu1 et Eo1, Eu2 et Eo2).

8. Procédé selon l'une des revendications précédentes,
**caractérisé en ce que**
il existe trois paires de trajets de mesure.

9. Procédé selon l'une des revendications précédentes,
**caractérisé en ce que**
il existe quatre paires de trajets de mesure.

10. Procédé selon l'une des revendications précédentes 7 à 9,
**caractérisé en ce que**
dans la seconde (104) et/ou dans la troisième étape (106), on a recours à des mesures de différentes paires de trajets de mesure.

11. Débitmètre à ultrasons (10) pour mesurer le débit d'un flux de gaz circulant travers une conduite tubulaire, le débitmètre à ultrasons (10) comprenant une portion de conduite horizontale (13) à travers laquelle le gaz peut s'écouler dans une direction d'écoulement (72) et qui comprend un axe central (60), et au moins une paire de trajets de mesure (30, 32, 34, 36) de longueur égale et écartés l'un de l'autre, s'étendant parallèlement l'un à l'autre dans des plans horizontaux séparés (Eu1, Eo1, Eu2, Eo2) et étant inclinés par rapport à ladite direction d'écoulement (72), tels que chaque plan horizontal d'une paire de trajets de mesure est décalé verticalement d'une distance prédéfinie égale (d1 ; d2) depuis ledit axe central (60), de sorte que l'un des plans est situé dans une zone supérieure au-dessus de l'axe central (60) et l'autre plan est situé dans une zone inférieure au-dessous de l'axe central (60), dans lequel un transducteur à ultrasons (24, 22, 24, 26) est agencé à chaque extrémité dudit trajet de mesure (30, 32, 34, 36) et chaque transducteur à ultrasons (20, 22, 24, 26) est adapté à agir sélectivement comme un émetteur d'ultrasons et comme un récepteur d'ultrasons, de telle sorte qu'il est possible d'émettre et de recevoir des signaux ultrasons dans les deux directions sur un trajet de mesure (30, 32, 34, 36) et de déterminer la vitesse d'écoulement du gaz dans le plan du trajet de mesure (30, 32, 34, 36) en se basant sur le temps de parcours mesuré des signaux ultrasons, le débitmètre à ultrasons (10) comprenant une unité de commande et d'évaluation (70),
**caractérisé en ce que**
l'unité d'évaluation (70) est adaptée à mettre en oeuvre un procédé selon l'une des revendications précédentes et à détecter la présence de liquide (50) dans la portion de conduite tubulaire (13).
